# EUROPÄISCHE PATENTSCHRIFT

(11) **EP 1 066 219 B1**
(45) Veröffentlichungstag und Bekanntmachung des Hinweises auf die Patenterteilung: **05.12.2001**
(21) Anmeldenummer: 99910317.9
(22) Anmeldetag: 02.03.1999
(51) Int. Cl.: C01B 33/04

(54) **VERFAHREN ZUR HYDRIERUNG HALOGENSUBSTITUIERTER SILIZIUMVERBINDUNGEN**
METHOD FOR HYDROGENATING HALOGEN-SUBSTITUTED SILICON COMPOUNDS
PROCEDE D'HYBRIDATION DE COMPOSES DE SILICIUM SUBSTITUES PAR UN HALOGENE

(30) Priorität: 23.03.1998 DE 19812587
(43) Veröffentlichungstag der Anmeldung: 10.01.2001
(73) Patentinhaber: Degussa AG, 40474 Düsseldorf (DE)
(72) Erfinder: Degussa AG, 40474 Düsseldorf (DE)
(86) Internationale Anmeldenummer: EP9901352
(87) Internationale Veröffentlichungsnummer: WO9948812

(56) Entgegenhaltungen:
- EP-A- 0 063 987
- EP-A- 0 412 342
- DE-A- 4 119 578

## Beschreibung

Die Erfindung betrifft ein Verfahren zur direkten Hydrierung halogensubstituierter Siliziumverbindungen. Wasserstoff-substituierte Verbindungen des Siliziums haben eine besondere technische Bedeutung erlangt. So wird Monosilan (SiH₄) zur Erzeugung hochreinen Siliziums fur die Halbleitertechnik und - wie auch das Disilan (Si₂H₆)- zur (epitaxialen) Abscheidung dünner Schichten in der Mikroelektronik bei der Herstellung von Chips und Dünnschicht-Solarzellen verwendet. Andererseits sind für die Herstellung organofi]nktioneller (Poly-) Siloxane die Wasserstoffsubstituierten Organochlorsilane Schlüsselverbindungen für die bekannte Hydrosilylierungsreaktion, wie zum Beispiel (CH₃)₂SiHCl, (CH₃)SiH₂Cl, (CH₃)SiHCl₂ etc., welche bei der technischen Müller-Rochow-Direktsynthese nur in unbedeutender oder dem jeweiligen Bedarf nicht entsprechender Menge anfallen.

Es fehlte daher nicht an Versuchen, die verschiedenen Silane in technischem Maßstab zu erzeugen. Weder die Acidolyse von Siliciden, noch die Umsetzung von Siliziumtetrachlorid mit Lithiumalanat in Etherlösung sind letztlich geeignet, Silane kostengünstig und in der erforderlichen Reinheit zu erzeugen. Bei der in größerem Maßstab durchgeführten katalytischen Dismutierung von Trichlorsilan entstehen neben einem Teil Monosilan drei Teile Siliziumtetrachlorid als Nebenprodukt, das aufgearbeitet werden muß. Schließlich werden Alanate oder daraus hergestellte Aminalane (R₃N-AlH₃) in organischen Lösungsmitteln mit Siliziumtetrafluorid zu Monosilan umgesetzt.

Eine Salzschmelze als Reaktionsmedium wurde bei einem kontinuierlich bzw. zyklisch ausgestaltbaren Verfahren benutzt und zur technischen Anwendung entwickelt. Die Hydrierung von Siliziumtetrachlorid erfolgt dabei durch Lithiumhydrid, das aus Lithium in einer LiCl-KCl-Schmelze bei 400°C hergestellt, dabei gelöst und anschließend umgesetzt wird. Nachteilig sind dabei die hohe Temperatur, Korrosionsprobleme sowie der hohe Preis und die Umweltbedenklichkeit von Lithiumverbindungen, schließlich auch der Wiederaufarbeitungspreis des anfallenden Lithiumchlorids [(1) DE-PS 1080077; (2) W. Sundermeyer et al. Angew. Chem 70 (1958) 625].

Die direkte Hydrierung von Siliziumtetrachlorid in einem eutektischen Gemisch von Natriumchlorid und Aluminiumchlorid (Smp. 108°C) beschreiben H. L. Jackson et al. [Inorg. Chem. 2 (1963) 43]. Bei der Reaktion von Wasserstoff mit einem hohen molaren Überschuß Aluminiumstaub werden bei 175°C und einem - die technische Anwendung praktisch ausschließenden - Druck von 960 bar in einem 400 ml -Schüttelautoklaven mit Stahlkugelfüllung 30g Siliziumtetrachlorid mit 70-100% Umsatz in 6 Stunden zu 5,8g Monosilan hydriert. Disilan und Dimethylsilan entstehen unter analogen Reaktionsbedingungen wegen Spaltung der Si-Si- bzw. Si-C-Bindungen nur in geringster Menge. Auch Monosilan bildet sich nur in Spuren, wenn das Aluminium nicht zusätzlich mit bis zu 3% eines "Aktivators" behandelt wird, z. B. Lithiumhydrid, Lithiumalanat, Natriumhydrid, Erdalkalihydride sowie der genannten Schmelze. Als Reaktionsmechanismus wird die Bildung von H_{X}AlCl_{3-X} als hydrierendes Agens beschrieben.

Die analoge Umsetzung von (Organo-) Chlorsilanen mit Wasserstoff und Aluminium in Salzschmelzen, bestehend aus Natriumchlorid und Aluminiumchlorid beschreiben auch H. J. Klockner et al. [EP 0412342] als bei Normaldruck ablaufend, wenn das Aluminium 0,03-0,25 Gew.-% eines Wasserstoff-übertragenden Metalles wie Titan, Zirkon, Hafbium, Vanadium, Niob oder Nickel - gemäß Beispielen als Legierung - enthält. Darüber hinaus werden auch hier unter anderen die gleichen "Aktivatoren" beansprucht wie durch H. L. Jackson et al. beschrieben: Lithiumalanat und Natriumhydrid, darüber hinaus Titanhydrid. In einer anderen Schrift [DE 4119578.7] werden Lithiumhydrid (siehe auch H. L. Jackson et al.) sowie Zirkonhydrid, Palladiumchlorid, Nickelchlorid und Raney-Nickel als "Aktivatoren" beansprucht. Als Reaktions-abfolge wird wieder die Erzeugung von H_{X}AlCl_{3-X} als eigentlich hydrierende Verbindung beschrieben, die zwischen 0,01-20 mol-%, insbesondere 10 mol-% bezogen auf die Schmelzmenge vorliegen sollen. Bei Verwendung einer Schmelze im Molverhältnis NaCl: AlCl₃ = 1: 1 wurden Ausbeuten an SiH₄ (90%) und (CH₃)₂SiH₂ (83-90%) beobachtet. Allerdings sind die Umsätze (% umgesetzte von insgesamt eingesetzter Ausgangsverbindung) und mehr noch die Raum-Zeit-Ausbeuten (RZA; g/l Reaktionsvolumen und Stunde) der einzelnen Komponenten außerordentlich niedrig. Beim SiCl₄ beträgt der Umsatz 20% (66g von 324g in 6 h) und die RZA nur 1,9g SiH₄/l·h. (CH₃)₂SiH₂ konnte nur mit einem Umsatz von
5-8% (15,5g von 327g in 2 h) und einer RZA von 3-6g/l·h erhalten werden. Vom eingeleiteten Wasserstoff wurde jeweils nur bis ca. 3% umgesetzt, da er gemäß Vorschrift in großem, 5-10-fachen Überschuß eingesetzt werden muß.

Aufgabe war es daher, ein Verfahren zur direkten Hydrierung von Si-Cl-Bindungen mit elementarem Wasserstoff bei gemäßigten Temperaturen und Drucken zu entwickeln, das die genannten Nachteile vermeidet und die Herstellung von Silanen auf technisch einfache und wirtschaftliche Weise ermöglicht.

Überraschend erwiesen sich nun interstitielle Hydride bildende Metalle, vorzugsweise Titan, Zirkon, Vanadium, Chrom, Mangan, Nickel, Palladium, Platin und Seltenerdmetalle, oder deren Kombination, insbesondere Titanmetall, dann als besonders gute Wasserstoff-Überträger für die Lösung dieser Aufgabe, wenn sie in sehr fein verteilter Form suspendiert vorliegen, vorzugsweise wenn sie innerhalb einer aus Alkali-/Erdalkalihalogeniden und Aluminiumhalogenid, insbesondere den Chloriden bestehenden Salzschmelze in situ durch Reduktion des entsprechenden Metallhalogenids mit einem elektropositiven Element (Halogenakzeptor I) erzeugt werden. Als Metallhalogenide können alle festen oder flüchtigen Verbindungen eingesetzt werden, wie zum Beispiel im Falle von Titan die Verbindungen des Typs TiX₄, TiX₃, TiX₂, bzw. TiX₆²⁻ oder TiX₆³⁻-Ionen enthaltende Salze (X = Halogen), vorzugsweise jedoch TiCl₄ oder TiCl₃, die in der Schmelze gelöst und durch die Halogenakzeptoren I, Magnesium, Calcium oder Aluminium zu Titanmetall reduziert werden. Sogenannte "Aktivatoren" in Form verschiedener vorgefertigter, teurer, Hydride oder Legierungen, wie sie aus dem Stand der Technik bekannt sind, werden bei dem erfindungsgemäßen Verfahren nicht benötigt.

Die als Reaktionsmedium dienende Salzschmelze besteht aus Gemischen von Alkali- und/oder Erdalkalihalogeniden und Aluminiumhalogeniden, vorzugsweise den Chloriden. Die Liquiduskurven der einzelnen Systeme gehen aus Tabellenwerken hervor [R. S. Roth, M. A. Clevinger, D. McKenna, Phase Diagrams for Ceramists, National Bureau of Standards, The American Ceramic Society, Inc., Vol. I-V, 1964-83]. Die Eutektika oder noch AlCl₃-haltigere Schmelzen sind zwar verwendbar, zeigen aber eine starke AlCl₃-Sublimation, was eine entsprechende technisch aufwendige Reaktionsführung erfordern würde.

| | | |
|---|---|---|
| Eutektika | LiAlCl₄ - AlCl₃ | Smp. 80°C |
| | NaAlCl₄ - AlCl₃ | Smp. 113°C |
| | KAlCl₄ - AlCl₃ | Smp. 133°C |
| | Mg(AlCl₄)₂ - AlCl₃ | Smp. 184°C |

Als vorteilhaft hat sich daher die Verwendung der (Tetra-) Chloroaluminate erwiesen, deren Dampfdruck erst weit oberhalb der erfindungsgemäß anzuwendenden Reaktionstemperaturen signifikant wird.

Beispiele sind:

| | |
|---|---|
| LiAlCl₄ | Smp. 143°C |
| NaAlCl₄ | Smp. 153°C |
| KAlCl₄ | Smp. 256°C |
| Mg(AlCl₄)₂ | Smp. 230°C |
| Ca(AlCl₄)₂ | Smp. 218°C |

Überraschend hat sich nun gezeigt, daß pseudobinäre und -ternäre Gemische dieser Chloroaluminate wegen der damit einhergehenden günstigen Änderung physikalischer Eigenschaften der Schmelzen besonders vorteilhaft für die Herstellung von und die direkte Hydrierung mit feindispersen, interstitielle Hydride bildenden Metallen einsetzbar sind, beispielsweise die Eutektika:

| | |
|---|---|
| NaAlCl₄ - KAlCl₄ | Smp. 125°C |
| NaAlCl₄ - KAlCl₄ - AlCl₃ | Smp. 89°C |
| NaAlCl₄ - KAlCl₄ - MgCl₂ | Smp. 125°C |
| KAlCl₄ - Ca(AlCl₄)₂ | Smp. 148°C |

Vorzugsweise wird das System NaAlCl₄ - KAlCl₄ im Verhältnis der Chloroaluminate von 70 : 30 mol-% (Eutektikum) eingesetzt, vorteilhaft auch mit einem weiteren Zusatz von LiAlCl₄, z. B. NaAlCl₄ - KAlCl₄ - LiAlCl₄ im Verhältnis 70 : 25 : 5 mol-%.

Die Reaktionen werden oberhalb der Schmelztemperatur des jeweils verwendeten Chloroaluminat-Systems und unterhalb der Zersetzungstemperatur der zu hydrierenden Edukte und der Produkte durchgeführt, das heißt zwischen Raumtemperatur und 600°C, vorzugsweise im Bereich 100-400°C, insbesondere im Bereich 150-300°C.

Mit dem in mindestens stöchiometrischer Menge in der Chloroaluminat-Schmelze durch intensives Rühren suspendierten Halogenakzeptor I wird das zugegebene Metallhalogenid zum Metall reduziert. Die Reduktion kann unter Inertgas durchgeführt werden, vorzugsweise aber bereits in Wasserstoff-Atmosphäre.

Die anschließende Hydrierung der halogensubstituierten Siliziumverbindungen am interstitielle Hydride bildenden Metall erfolgt durch deren kontinuierliche und gleichzeitige Einleitung mit Wasserstoff in die Salzschmelze unter Zugabe eines Halogenakzeptors II in mindestens stöchiometrischer Menge bezogen auf das eingesetzte Chlorsilan. Bei weiteren Hydrierungen in derselben Schmelze wird entsprechend dessen Verbrauch nur noch weiterer Halogenakzeptor II nachdosiert. Als vorteilhaft hat sich gezeigt, daß - abgestimmt auch auf das jeweils verwendete Schmelzsystem - als Halogenakzeptoren I bzw. II die gleichen elektropositiven Elemente verwendet werden.

Bezüglich der Partikelgröße der zugesetzten Halogenakzeptoren I bzw. II besteht keine Notwendigkeit, in Herstellung und Handhabung besonders aufwendige, feine Pulverqualitäten zu verwenden. Auch wenn diese für die erfindungsgemäße Reaktion grundsätzlich einsetzbar sind, haben sich vorzugsweise Pulver aus z. B. gewöhnlichem Hüttenaluminium mit einem Körnungsbereich 150-1000 um bewährt. Noch grobere Körnungen sind ebenfalls geeignet, sofern sie die Rührorgane des Reaktors nicht beeinträchtigen.

Normalerweise wird die Hydrierung bei Atmosphärendruck durchgeführt. Zur Erhöhung der Wasserstoff-Löslichkeit kann auch bei erhöhten Drücken gearbeitet werden, doch ist ein ähnlicher Effekt auch durch Dispersion mittels geeigneter, vorzugsweise begasender Rührertypen zu erreichen. Diese bieten zudem den Vorteil, daß stets nur der verbrauchte Wasserstoff in stöchiometrischer Menge, bezogen auf das zu hydrierende Halogensilan, ergänzt werden muß, während die - grundsätzlich auch im erfindungsgemäßen Verfahren anwendbare - Durchleitung eines hohen Überschusses an Wasserstoff nachteilig ist bezüglich dessen Wiedergewinnung bzw. der Produktausschleusung. Die Silane werden üblicherweise durch Auskondensieren in Kühlfallen abgetrennt und anschließend durch Tieflemperaturrektifikation [H. Hiller, gas aktuell (Messer Griesheim), 33, 1987, 2-6] gereinigt. Bei hohen Durchsätzen des Wasserstoff-/Halogensilan-Gemisches konnten mit dem erfindungsgemäßen Verfahren auch partiell hydrierte (Organo-) Chlorsilane als Nebenprodukte erhalten werden.

Als die Reaktion besonders fördernd wurde für die erfindungsgemäße Hydrierung der Zusatz eines Überschusses gelösten und/oder suspendierten Alkali- bzw. Erdalkalihalogenids (-chlorids) beobachtet, vorzugsweise in einem solchen Mischungsverhältnis, daß die Liquidität der Salzschmelze nicht oder nicht wesentlich verändert wird. Der stetigen Zunahme des Schmelzvolumens durch die Reaktionsnebenprodukte begegnet man durch gelegentliches Ablassen bzw. Abhebern eines Teils und gesonderter Aufarbeitung. Die Verwendung einer Salzschmelze als Reaktionsmedium ermöglicht als Kombinationsschritt darüber hinaus die Rückgewinnung der Halogenakzeptormetalle durch Elektrolyse direkt in der Salzschmelze nach literaturbekannten Verfahren [H. J. Klockner et al., Z. anorg. allg. Chem. 509 (1984) 76-84], vorteilhafterweise auch unter Verwendung einer selbstauflösenden Silizium-Anode und gleichzeitiger Erzeugung von Siliziumtetrachlorid [W. Sundermeyer et al., Chem. Ing. Techn. 37 (1965) 14].

Die folgenden Beispiele zeigen, daß mit dem erfindungsgemäßen Verfahren Silane mit hohen Ausbeuten und den Stand der Technik weit übertreffenden Umsatzraten und Raum-Zeit-Ausbeuten erzeugt werden können.

### Beispiele

### Beispiel 1

4 mol (533,36g) AlCl₃ wurden mit 2,8 mol (163,64g) wasserfreiem NaCl und 1,2 mol (89,64g) wasserfreiem KCl gemischt und beispielsweise in einem in der Literatur beschriebenen Reaktionsgefäß [G. Brauer, Handbuch der präparativen anorganischen Chemie, 3. Auflage, Bd. 1, S. 101, F. Enke Verlag, Stuttgart 1975] bei 200°C erschmolzen. Anschließend wurde die gewünschte Reaktionstemperatur (siehe Tabelle 1) eingestellt und jeweils 0,1 mol Halogenid des zu untersuchenden, interstitielle Hydride bildenden Metalles in der Schmelze gelöst bzw. suspendiert und in Wasserstoffatmosphäre mit 0,2 mol (Mg, Ca) bzw. 0,15 mol (Al) als Halogenakzeptor I zum Metall reduziert.

Anschließend wurden nach Zugabe von 0,2 mol des Halogenakzeptors II standardisiert jeweils 0,08 mol (10 ml) (CH₃)₃SiCl im Wasserstoffstrom (1 l/h) innerhalb von 1,5 h durchgeleitet. Das Produktgemisch aus (CH₃)₃SiCl und (CH₃)₃SiH wurde in zwei Kühlfallen (-78°C/-196°C) aufgefangen und gaschromatographisch bestimmt.

Zum Vergleich wurde unter analogen Reaktionsbedingungen das dem Stand der Technik entsprechende, mit 0,2 Gew.-% Titan legierte Aluminiumpulver mit dem H₂-/(CH₃)₃SiCl-Gemisch umgesetzt (vgl. erste Zeile der Tabelle 1).

**Tabelle 1**

| (zu Beispiel 1) | | | | | | | | |
|---|---|---|---|---|---|---|---|---|
| **NaAlCl**_{**4**}**- KAlCl**_{**4**}**-Schmelze** | | | | **Umsatz in %** | | | | |
| Halogenid | Metall | Halogenakzeptor I | Halogenakzeptor II | 200°C | 230°C | 250°C | 280°C | 300°C |
| | | | Al-Leg. (0,2 % Ti) | 3,5 | 2,7 | 4,7 | | |
| TiCl₄ | Ti | Mg | Mg | 1,0 | | 3,1 | 4,8 | 2,9 |
| TiCl₄ | Ti | Ca | Al | | >95 | | | |
| TiCl₄ | Ti | Al | Al | >95 | >95 | >95 | | |
| ZrCl₄ | Zr | Al | Al | 9,2 | 18,8 | 10,7 | | |
| VCl₃ | V | Mg | Mg | 12,3 | | 12,3 | 31,0 | |
| VCl₃ | V | Al | Al | 11,4 | 64,1 | 54,6 | | |
| CrCl₃ | Cr | Mg | Mg | 31,0 | | 43,2 | 24,2 | |
| CrCl₃ | Cr | Al | Al | 5,0 | 9,2 | 18,8 | | |
| MnCl₂ | Mn | Mg | Mg | 27,5 | | 53,9 | 55,9 | 56,9 |
| MnCl₂ | Mn | Al | Al | 13,6 | 29,8 | 35,6 | | |
| NiCl₂ | Ni | Ca | Al | | 11,2 | | | |
| NiCl₂ | Ni | Mg | Mg | 3,9 | | 25,4 | 43,2 | 32,0 |
| NiCl₂ | Ni | Al | Al | 1,0 | 4,6 | 7,1 | | |
| PdCl₂ | Pd | Ca | Al | 10,8 | 21,4 | | | |
| PdCl₂ | Pd | Al | Al | 7,1 | 12,1 | 14,7 | | |
| K₂PtCl₆ | Pt | Ca | Al | | 19,2 | | | |
| K₂PtCl₆ | Pt | Al | Al | 20,9 | 24,3 | 32,6 | | |
| LnCl₃ | Ln | Ca | Al | | 11,0 | | | |
| LnCl₃ | Ln | Mg | Mg | 13,9 | | 16,1 | | |
| FeCl₃ | Fe | Mg | Mg | 13,8 | | 10,0 | 47,6 | 26,5 |
| CoCl₂ | Co | Mg | Mg | 9,9 | | 19,4 | 21,9 | |
| AgCl | Ag | Al | Al | 8,8 | 27,5 | 27,4 | | |

### Beispiel 2

In dem genannten Reakfionsgefäß wurde ein Gemisch aus 393g wasserfreiem NaCl, 215g wasserfreiem KCl und 1067g AlCl₃ bei ca. 150°C geschmolzen. Nach Einstellung der Temperatur auf ca. 300°C wurden 190g TiCl₄ in H₂-Atmosphäre und in Gegenwart von 180g Al-Pulver innerhalb von 2 h unter Rühren eingeleitet und zu Titanmetall reduziert.

Nach Einstellen der Reaktionstemperatur auf 205°C und Zugabe von 20g Al- Pulver wurden 171g (CH₃)₃SiCl innerhalb von 2 h im Wasserstoffstrom von 12 l/h in die Titanmetall-Suspension unter starkem Rühren eingeleitet.

15,9g (CH₃)₃SiCl wurden zurückerhalten, 148,6g (CH₃)₃SiCl umgesetzt, was einem Umsatz von 87% entspricht. Die Ausbeute an (CH₃)₃SiH betrug 90,5g, (entsprechend 89%) und die RZA 45g/l·h.

### Beispiel 3

In dieselbe Schmelze aus Beispiel 2 wurden 35g Al-Pulver zudosiert und 208,5g (CH₃)₂SiCl₂ bei 210°C mit einem Wasserstoffstrom von 18 l/h innerhalb von 2,5 h eingeleitet.

Nach Rückgewinnung von 72,6g (CH₃)₂SiCl₂ durch Rektifikation (Umsatz 65%) wurden 60g (CH₃)₂SiH₂ entsprechend einer Ausbeute von 94,5% und einer RZA von 24g/l·h erhalten.

### Beispiel 4

In eine entsprechend Beispiel 2 vorbereitete Schmelze wurden 35g Al- Pulver zugegeben und 150g SiCl₄ bei 230°C im Wasserstoffstrom (50 l/h) innerhalb von 1 h eingeleitet.

54g SiCl₄ wurden zurückgewonnen, was einem Umsatz von 64% entspricht. 16,7g Monosilan SiH4, entsprechend 92% Ausbeute und einer RZA von 16,7g/l·h wurden isoliert.

### Beispiel 5

In dieselbe Schmelze aus Beispiel 4 wurden, nach Zugabe von 35g Al-Pulver, 65g NaCl und 20g LiCl zudosiert und 136g SiHCl₃ innerhalb von 1 h mit 40 l/h Wasserstoff eingeleitet.

Nach Abtrennung von 14g SiHCl₃ (Umsatz 89,7%) durch Rektifikation wurden 27,6g SiH₄ gewonnen, was einer Ausbeute von 96% und einer RZA von 27,6g/l·h entspricht.

### Beispiel 6

In einer gemäß Beispiel 2 vorbereiteten Schmelze wurden 10g Al-Pulver zudosiert und 26,9g Si₂Cl₆ bei 230°C mit einem Wasserstoffstrom von 5 l/h innerhalb von 2,5 h eingeleitet.

Nach Rückgewinnung von 5,4g Si₂Cl₆ durch Rektifikation (Umsatz 80%) wurden 3g Si₂H₆ entsprechend einer Ausbeute von 60% und 2,05g SiH₄ entsprechend einer Ausbeute von 40% erhalten.

## Patentansprüche

1. Verfahren zur Hydrierung halogensubstituierter Siliziumverbindungen durch deren Umsetzung mit Wasserstoff in einer Chloroaluminat-Salzschmelze als Reaktionsmedium durch Umsetzung eines Halogensilan-Wasserstoffgemisches mit interstitielle Hydride bildendem, in der Schmelze suspendiertem Metall, **dadurch gekennzeichnet, daß** man das feinverteilte, interstitielle Hydride bildende Metall durch Reduktion von dessen Metallhalogeniden mit einem elektropositiven Element als Halogenakzeptor I, ausgewählt aus der Gruppe bestehend aus Magnesium, Calcium und Aluminium, in situ in der Schmelze erzeugt.

2. Verfahren gemäß Anspruch 1, **dadurch gekennzeichnet, daß** man als interstitielle Hydride bildendes Metall Titan, Zirkon, Vanadium, Chrom, Mangan, Nickel, Palladium, Platin, Seltenerdmetalle oder deren Kombination einsetzt.

3. Verfahren gemäß Ansprüchen 1 und 2, **dadurch gekennzeichnet, daß** man als interstitielle Hydride bildendes Metall Titan einsetzt.

4. Verfahren gemäß Ansprüchen 1 bis 3, **dadurch gekennzeichnet, daß** man die Hydrierung in Gegenwart eines Halogenakzeptors II, ausgewählt aus der Gruppe bestehend aus Magnesium, Calcium und Aluminium, durchführt.

5. Verfahren gemäß Ansprüchen 1 bis 4, **dadurch gekennzeichnet, daß** die Chloroaluminat-Salzschmelze zusätzlich weiteres Alkali- und/oder Erdalkalihalogenid enthält.

6. Verfahren gemäß Ansprüchen 1 bis 5, **dadurch gekennzeichnet, daß** die Reaktion oberhalb der Schmelztemperatur der Chloroaluminate beziehungsweise unterhalb der Zersetzungstemperatur der Siliziumwasserstoffverbindungen durchgeführt wird.

7. Verfahren gemäß Anspruch 6, **dadurch gekennzeichnet, daß** die Reaktion zwischen Raumtemperatur und 600°C durchgeführt wird.

8. Verfahren gemäß Ansprüchen 1 bis 7, **dadurch gekennzeichnet, daß** als halogensubstituierte Siliziumverbindungen Trichlorsilan (SiHCl₃), Tetrachlorsilan (SiCl₄) oder Hexachlordisilan (Si₂Cl₆) mit Wasserstoff umgesetzt werden.

9. Verfahren gemäß Ansprüchen 1 bis 7, **dadurch gekennzeichnet, daß** als halogensubstituierte Siliziumverbindungen Organo-Halogensilane eingesetzt werden.

10. Verfahren gemäß Anspruch 9, **dadurch gekennzeichnet, daß** als Organo-Halogensilane Methyltrichlorsilan, Dimethyldichlorsilan und Trimethylchlorsilan eingesetzt werden.

11. Verfahren gemäß Ansprüchen 1 bis 10, **dadurch gekennzeichnet, daß** zur Wiedergewinnung des Akzeptormetalles I und/oder II die Chloroaluminat-Schmelze elektrolysiert wird.

12. Verfahren gemäß Anspruch 11, **dadurch gekennzeichnet, daß** bei der Elektrolyse der Chloroaluminat-Schmelze eine Silizium-Anode verwendet wird.

## Claims

1. A process for the hydrogenation of halogensubstituted silicon compounds by reacting them with hydrogen in a chloroaluminate salt melt as reaction medium by reaction of a halosilane/hydrogen mixture with a metal capable of forming interstitial hydrides which is suspended in the melt, **characterized in that** the finely divided metal forming interstitial hydrides is produced in situ in the melt by reduction of its metal halides with an electropositive element as halogen acceptor I selected from the group consisting of magnesium, calcium and aluminium.

2. A process according to claim 1, **characterized in that** the metal forming interstitial hydrides which is used is titanium, zirconium, vanadium, chromium, manganese, nickel, palladium, platinum, a rare earth metal or a combination thereof.

3. A process according to claim 1 and 2,
**characterized in that** the metal forming interstitial hydrides is titanium.

4. A process according to any of claims 1 to 3, **characterized in that** the hydrogenation is carried out in the presence of a halogen acceptor II selected from the group consisting of magnesium, calcium and aluminium.

5. A process according to any of claims 1 to 4, **characterized in that** the chloroaluminate salt melt further comprises an additional alkali metal halide and/or alkaline earth metal halide.

6. A process according to any of claims 1 to 5, **characterized in that** the reaction is carried out at above the melting point of the chloroaluminates and below the decomposition temperature of the silicon-hydrogen compounds.

7. A process according to claim 6, **characterized in that** the reaction is carried out in the range from room temperature to 600°C.

8. A process according to any of claims 1 to 7, **characterized in that** the halogen-substituted silicon compound which is reacted with hydrogen is trichlorosilane (SiHCl₃), tetrachlorosilane (SiCl₄) or hexachlorodisilane (Si₂Cl₆).

9. A process according to any of claims 1 to 7, **characterized in that** the halogen-substituted silicon compounds used are organohalosilanes.

10. A process according to claim 9, **characterized in that** organohalosilanes used are methyltrichlorosilane, dimethyldichlorosilane and trimethylchlorosilane.

11. A process according to any of claims 1. to 10, **characterized in that** the chloroaluminate melt is electrolyzed to recover the acceptor metal I and/or II.

12. A process according to claim 11, **characterized in that** a silicon anode is used in the electrolysis of the chloroaluminate melt.

## Revendications

1. Procédé d'hydrogénation de composés du silicium substitués par un halogène, par leur réaction avec l'hydrogène dans un produit de fusion avec un sel à base de chloroaluminate en tant que milieu réactionnel, par mise en réaction d'un mélange halogénosilane/hydrogène avec un métal mis en suspension dans le produit de fusion, formant des hydrures interstitiels,
**caractérisé en ce qu'**
on produit « in situ » dans le produit de fusion le métal formant des hydrures intertitiels, finement divisés, par réduction de leurs halogénures métalliques avec un élément électropositif en tant qu'accepteur d'halogène (I) choisi dans le groupe qui comprend le magnésium, le calcium et l'aluminium.

2. Procédé selon la revendication 1,
**caractérisé en ce qu'**
on met en oeuvre comme métal formant des hydrures interstitiels, du titane, du zirconium, du vanadium, du chrome, du manganèse, du nickel, du palladium, du platine, des métaux du groupe des terres rares, ou leurs combinaisons.

3. Procédé conformément aux revendications 1 à 2,
**caractérisé en ce qu'**
on met en oeuvre comme métal formant des hydrures interstitiels, du titane.

4. Procédé conformément à l'une quelconque des revendications 1 à 3,
**caractérisé en ce qu'**
on effectue l'hydrogénation en présence d'un accepteur d'halogène (II) choisi dans le groupe qui comprend le magnésium, le calcium, et l'aluminium.

5. Procédé conformément à l'une quelconque des revendications 2 à 4,
**caractérisé en ce que**
le produit de fusion avec un sel à base de chloroaluminate contient en supplément un autre halogénure de métal alcalin et ou de métal alcalino-terreux.

6. Procédé conformément à l'une quelconque des revendications 1 à 5,
**caractérisé en ce qu'**
on effectue la réaction au-dessus du point de fusion des chloroaluminates ou en dessous de la température de décomposition des composés d'hydrogène et de silicium.

7. Procédé conformément à la revendication 6,
**caractérisé en ce qu'**
on effectue la réaction entre la température ambiante et 600°C.

8. Procédé conforme à l'une quelconque des revendications 1 à 7,
**caractérisé en ce que**
comme composés du silicium substitués par un halogène, on met en réaction de trichlorosilane (SiHCl₃), du tétrachlorosilane (SiCl₄) ou de l'hexachlorodisilane (Si₂Cl₆) avec de l'hydrogène.

9. Procédé conformément à l'une quelque des revendications 1 à 7,
**caractérisé en ce que**
comme composés du silicium substitués par un halogène, on met en oeuvre des organohalogénosilanes.

10. Procédé conformément à la revendication 9,
**caractérisé en ce que**
comme organohalogénosilane, on met en oeuvre du méthyltrichlorosilane, du diméthyldichlorosilane, et du triméthylchlorosilane.

11. Procédé conformément aux revendications 1 à 10,
**caractérisé en ce que**
pour la récupération du métal accepteur I et/ou II, on électrolyse le produit de fusion à base de chloroaluminate.

12. Procédé conformément à la revendication 11,
**caractérisé en ce que**
pour l'électrolyse du produit de fusion à base de chloroaluminate, on utilise une anode de silicium.
